# DEMANDE DE BREVET EUROPEEN

(11) **EP 4 707 082 A1**
(43) Date de publication de la demande: **11.03.2026**
(21) Numéro de dépôt: 25193472.5
(22) Date de dépôt: 01.08.2025
(51) Int. Cl.: B60T 7/04, B60T 11/18, B60T 7/06, B60T 13/74

(54) **DISPOSITIF DE COMMANDE ÉLECTRIQUE ANTIBLOCAGE POUR VÉHICULE AUTOMOBILE**

(30) Priorité: 10.09.2024 FR 2409624
(71) Demandeur: Robert Bosch GmbH, 70442 Stuttgart (DE)
(72) Inventeur: Sprocq, Raynald, 77450 Esbly (FR); Anderson, Chris, 75002 Paris (FR)

(57) **Abrégé**

Dispositif comprenant : un cylindre (12) recevant un piston (2) muni d'un patin d'actionnement (23), un système de ressort (3) de rappel du piston (2) un capteur (4) de la translation du piston (2) et une unité d'exploitation (5) pour générer un signal (SC). Un capot (6) coulissant
* entourant le cylindre (12) à partir du socle (11) jusque sous le patin (23),
* indépendant du mouvement du piston (1) dans sa course d'enfoncement
* laissant un intervalle entre son dessus (62) et le dessous (233) du patin (23), est relié en coulissement au socle (11) par un guide (7) à ressort auxiliaire (72) rappelant le capot (6) dans sa position haute de repos. Le capot 6 permet l'enfoncement du piston 2 pour commander la fonction et signaler l'incident.

## Description

### 1 DOMAINE DE L'INVENTION

L'invention se rapporte à un dispositif de commande électrique antiblocage pour véhicule automobile de type commande de frein ou d'accélérateur, comprenant un corps avec un socle portant un cylindre recevant un piston muni d'un patin d'actionnement pour le pied du conducteur, un système de ressorts comprenant un ressort de rappel du piston vers sa position de repos, un capteur de la translation du piston soumis à la poussée du conducteur sur le patin et une unité d'exploitation reliée au capteur de translation pour générer un signal transmis à l'unité de gestion du véhicule pour commander le système de freinage en réponse à la poussée.

### 2 ETAT DE LA TECHNIQUE

Dans le domaine automobile, les constructeurs développent de plus en plus des dispositifs de commande électrique des fonctions de freinage et d'accélération pour remplacer les dispositifs mécaniques à pédales et réduire, de manière significative, le nombre de composants et leur encombrement pour créer du volume disponible pour d'autres équipements.

Les dispositifs de commande électrique de véhicule qui sont des systèmes à guidage linéaire pour commander la fonction de freinage ou d'accélération, ont des courses relativement faibles par comparaison aux pédales traditionnelles ; certains constructeurs imposent des conditions d'installation dans un espace très limité entre le dessous du dispositif de commande et le niveau du revêtement de sol tel que la moquette. De plus, ils imposent que la moquette ne subisse pas de déplacement dans l'environnement du dispositif de commande bien que la moquette ou le revêtement soit souple. Les raisons de ces exigences peuvent être d'ordre esthétique ou ergonomique. Dans de telles installations, la moquette est au voisinage immédiat de la commande et peut même venir sur le bord du boîtier externe du dispositif de commande. Mais, cette installation a l'inconvénient d'être relativement sensible à de petits corps étrangers (petits objets ou graviers) qui risquent de se loger dans l'intervalle entre le dessous du patin de la commande et la moquette, et gêner, voire bloquer l'actionnement mécanique de la commande. Or, de tels dispositifs de commande dépendent totalement de la détection du déplacement ou de la force d'actionnement de la commande pour générer le signal destiné au système du véhicule ; ces incidents peuvent même neutraliser complètement la fonction à commander sans possibilité de fonction de secours.

### BUT DE L'INVENTION

La présente invention a pour but de développer un dispositif de commande de système à guidage linéaire pour commander la fonction d'accélération ou de freinage permettant une réduction des composants et de garantir leur fonctionnement, même en cas d'intrusion de corps étrangers et permettre, le cas échéant, de signaler cette intrusion au conducteur.

### EXPOSE ET AVANTAGES DE L'INVENTION

A cet effet, l'invention a pour objet un dispositif de commande électrique antiblocage actionné par le conducteur, comme système à guidage linéaire de commande de la fonction d'accélération ou de freinage de véhicule,
   comprenant :
   un corps avec un socle portant un cylindre recevant un piston muni d'un patin d'actionnement pour recevoir la poussée par le pied du conducteur,
B.un système de ressort avec un ressort de rappel du piston vers sa position de repos,
C. un capteur de la translation du piston soumis à la poussée du conducteur sur le patin et
D. une unité d'exploitation recevant le signal du capteur de translation pour générer un signal de commande de la fonction en réponse à la poussée,
   caractérisé en ce qu'il comprend un capot coulissant :
   * entourant le cylindre à partir du socle jusqu'au patin,
   * indépendant du mouvement du piston dans la course d'enfoncement (A) du patin entre sa position haute de repos et sa position basse d'enfoncement maximum,
   * laissant un intervalle entre son dessus et le dessous du patin, et
   * relié en coulissement au socle par son bord inférieur par un guide à ressort auxiliaire maintenant ou rappelant le capot dans sa position haute de repos.

Le dispositif de commande selon l'invention permet non seulement une réalisation compacte et robuste et une conception segmentée, mais aussi la garantie du fonctionnement du dispositif de commande en cas de blocage du patin par rapport au capot le protégeant et d'assurer le fonctionnement de celui-ci, même en cas de défaillance du capteur de course générant le signal produisant l'action demandée.

La fonction à commander est une de celles habituellement commandées par la pédale d'accélérateur ou la pédale de frein dans un environnement tout électrique, cette commande étant connue aussi sous la dénomination « by wire control ».

Il est à souligner que, dans le cas du freinage, cette fonction peut s'appliquer aux différents ensembles du véhicule comprenant la commande des freins de roue, et aussi, la gestion de l'entraînement et le freinage régénératif.

Le dispositif de commande facilite la complète séparation et le scellement des composants électroniques et des connecteurs pour la redondance et l'information du conducteur par l'émission d'un signal d'avertissement optique, par exemple, sur le tableau de bord ou un signal haptique. En cas de défaillance totale et de blocage, la mise en mode de secours de la fonction est gérée par ce dispositif de commande et dans le cas d'un système de freinage, le freinage de secours peut être actionné.

Le dispositif de commande électrique selon l'invention s'intègre parfaitement dans l'habillage de l'habitacle du véhicule ; il répond aux besoins d'intégration les plus exigeants du point de vue de l'esthétique et de la fonctionnalité ; il peut être installé sous le revêtement du plancher de l'habitacle et dépasser du relief formé par l'habillage autour du corps du dispositif de commande dont seul dépasse le patin d'actionnement pour le pied en laissant l'espace de manœuvre, c'est-à-dire la hauteur du patin par rapport au corps du dispositif de commande pour permettre son repérage et son actionnement sans limiter sa course.

Cette intégration est possible grâce à la sécurité offerte par le dispositif de commande qui ne peut être bloqué par un corps étranger tel qu'un caillou qui pourrait se loger entre le dessous du patin et le dessus de l'habillage puisque le patin pourra être toujours actionné pour générer la commande de la fonction selon la demande du conducteur tout en informant le conducteur de l'incident pour, le cas échéant, y remédier et rétablir le fonctionnement normal.

Selon l'invention, l'intervalle d'enfoncement est défini par le bord supérieur du cylindre et une collerette du piston au-dessus de laquelle le patin est fixé au prolongement du piston, le patin installé sur le piston laissant par rapport au dessus du capot un intervalle supérieur à l'intervalle d'enfoncement pour ne pas s'appuyer directement sur le dessus du capot dans sa course d'enfoncement entre sa position haute de repos et sa position d'enfoncement maximum.

En particulier, le capot a une forme de dôme avec : un dessus dont le bord borde une ouverture pour le passage de l'extrémité du piston recevant le patin, et une paroi latérale dont le bord inférieur coopère avec les guides de coulissement du capot, intégrant les ressorts auxiliaires de rappel du capot en position de repos, la course de coulissement possible pour le mouvement d'enfoncement du capot étant supérieure à l'intervalle entre le dessus du capot, le cas échéant couvert par le revêtement de sol et le dessous du patin et qui est accessible aux corps étrangers.

L'intervalle entre le patin et le capot tout en restant pour la manœuvre normale du dispositif, est garni entre sur le bord supérieur du capot et le dessous du patin par un joint souple en forme de soufflet.

Selon une variante, le dispositif comprend
- un premier ensemble capteur-index pour détecter la course d'enfoncement du patin,
   - le capteur porté par le cylindre et l'index porté par le corps du piston, coopérant entre eux par un champ local d'interaction,
   - le capteur étant sur le trajet de l'index entre la position de repos et la position d'enfoncement maximum du piston pour une poussée maximum sur le patin par le conducteur, et
- un second ensemble capteur-index, installé hors du champ local d'interaction du premier ensemble,
   - l'index étant porté par le piston,
   - le second capteur étant porté par le capot dans le champ d'interaction de son index,
- le premier ensemble fournissant un signal de translation du piston selon la poussée sur le patin,
   - le deuxième ensemble fournissant un signal du déplacement relatif du piston par rapport au déplacement du capteur porté par le capot et,
   - les signaux des capteurs étant fournis à l'unité d'exploitation pour générer :
      * un signal de commande de la fonction et,
      * un signal d'avertissement pour le conducteur si
      ** le signal du premier capteur de translation est inexistant et si
      ** le signal du deuxième capteur porté par le capot indique un déplacement relatif nul du deuxième capteur porté par le capot, par rapport à son index porté par le piston, ou
      * un signal de de secours s'il reçoit les signaux nuls.

Selon une autre variante, le dispositif comprend
- un premier ensemble capteur-index pour détecter la course d'enfoncement du patin, le capteur porté par le cylindre et l'index porté par le corps du piston coopérant par un champ local d'interaction, le capteur étant sur le trajet de l'index entre sa position de repos et la position d'enfoncement maximum du piston pour une poussée maximum sur le patin par le conducteur,
- un second ensemble capteur-index, installé hors du champ d'interaction du premier ensemble,
   - l'index étant porté par le piston,
   - le capteur étant porté par le cylindre dans le champ d'interaction de l'index,
- un élément perturbateur du champ local d'interaction du second ensemble porté par le capot et installé pour :
   - au repos, à l'état initial, être ou non dans le champ local d'interaction du deuxième ensemble,
   - dans des conditions de poussée, être hors du champ d'interaction du second ensemble

Ainsi, selon cette autre variante,
- le premier capteur (4) génère :
   un signal de translation (Si) pour la poussée (P) quel que soit l'état du deuxième capteur (4a) et la présence ou non d'un corps étranger (OB) dans l'intervalle (A), et
   - un signal nul (Si=0) si le premier ensemble (4, 41) est en panne,
- le second capteur (4a) génère :
   - au repos :
      * un signal initial perturbé (Si'0p) en position de repos si l'élément perturbateur (41c) est initialement dans le champ local d'interaction du deuxième ensemble (capteur-index) (4a, 41a),
      * un signal initial non perturbé (Si'0) si l'élément perturbateur (41c) n'est pas initialement dans le champ local d'interaction du deuxième ensemble (4a, 41a),
   - pendant l'application de la poussée (P), sans insertion d'un corps étranger (OB),
      * un signal non perturbé (Si') puisque l'élément perturbateur (41c) est mis hors du champ local d'interaction de l'index (41a) déplacé avec le piston (2),
   - pendant l'application de la poussée (P+ΔP), avec insertion d'un corps étranger (OB), :
      * générer un signal perturbé (Si'p) de l'index (41a) pendant tout le mouvement du piston (2) sous la poussée (P+ΔP),
      * générer un signal nul (Si'=0) (absence de signal) en cas de défaillance du second ensemble (4a, 41a), et
- l'unité de traitement (5) génère :
   ** un signal de commande (Sc) à partir du signal (Si) du premier capteur (4),
   ** un signal d'avertissement (SA) si le signal perturbé (Si'p) du deuxième capteur (4a) accompagne le signal (Si) et,
   ** un signal de secours (SSEC) si le signal (Si) est nul et le signal (Si') est nul et si le signal (S'ip) apparaît.

De façon avantageuse, pour le réglage du ressort de rappel, le cylindre du piston a une cavité axiale débouchant dans le dessous du piston et recevant le ressort hélicoïdal de rappel, appuyé contre le fond de la cavité et contre un support de ressort relié au fond du cylindre.

En particulier, dans ce cas, le support de ressort est une plaquette surmontée d'un relief engagé dans l'extrémité du ressort de rappel pour le guider et le tenir,
le support étant solidaire d'une tige de réglage traversant, de façon réglable, le fond du cylindre.

### BREVE DESCRIPTION DES DESSINS

La présente invention sera décrite ci-après de de manière plus détaillée à l'aide d'un mode de réalisation d'un dispositif de commande électrique représenté schématiquement dans les dessins annexés dans lesquels :
[Fig. 1] vue en perspective du dispositif de commande,
[Fig. 2] vue en coupe axiale du dispositif de commande,
[Fig. 2A] vue en coupe axiale selon la figure 2 du corps du dispositif de commande,
[Fig. 3A] vue en coupe axiale du dispositif de commande de la figure 2 actionné,
[Fig. 3B] vue en coupe axiale du dispositif de commande avec un corps étranger en position actionnée,
[Fig. 4] vue en coupe axiale d'une variante du dispositif de commande, [Fig. 4A] vue en coupe axiale de la variante du dispositif de commande actionné,
[Fig. 4B] vue en coupe axiale du dispositif de commande de la figure 4 avec un corps étranger en position actionnée,
[Fig. 5] vue en coupe axiale d'une autre variante du dispositif de commande,
[Fig. 5A] vue en coupe axiale du dispositif de commande de la figure 5, actionné,
[Fig. 5B] vue en coupe axiale de la variante du dispositif de commande de la figure 5 avec un corps étranger, en position actionnée.

### DESCRIPTION D'UN MODE DE REALISATION DE L'INVENTION

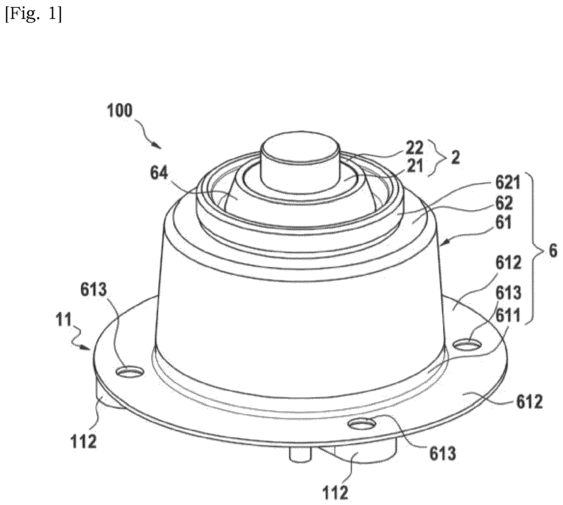

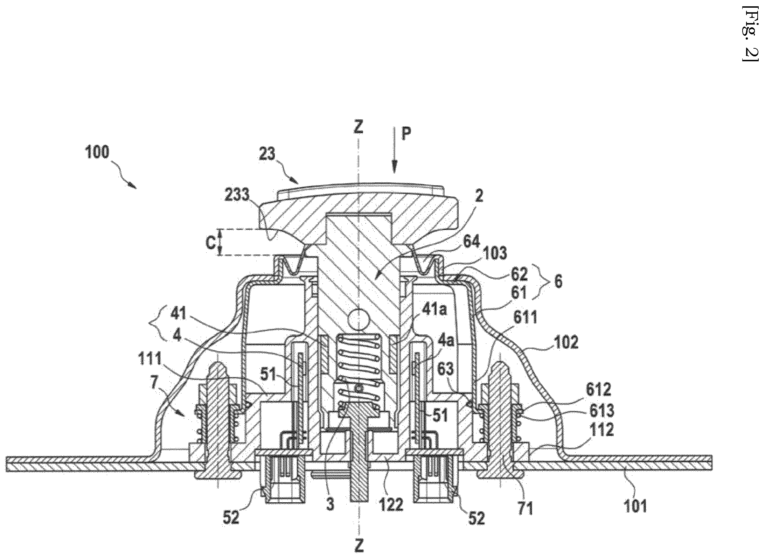

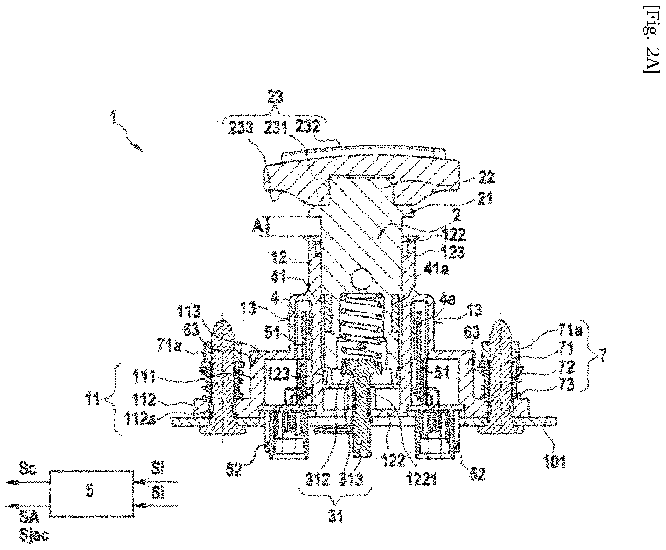

Selon les figures 1, 2, 2A, le dispositif de commande électrique antiblocage 100 se compose d'un corps 1 formé d'un socle 11 et avec un cylindre 12 recevant un piston 2 actionné par le pied du conducteur exerçant une poussée (P) dans le sens de l'enfoncement contre un ressort de rappel 3. L'ensemble ainsi formé a globalement une symétrie de rotation par rapport à l'axe ZZ du piston 2. Le dessus du cylindre 21 porte le patin 23 dont le manchon 231 est engagé sur le prolongement 22 du piston 2, de façon à laisser le patin 23 accessible et non couvert ou intégré dans le revêtement couvrant le sol.

La figure 1 montre le dispositif de commande 100 avec son capot 6 mais sans le patin 23 qui est un élément séparé, personnalisé selon la demande du constructeur alors que les autres parties du dispositif 100 sont identiques pour toutes ces formes de patins.

Le dispositif de commande 100 couvert par un capot 6, est fixé au plancher 101 de l'habitacle, sous le revêtement 102, par exemple, une moquette, ne laissant dépasser que le prolongement 22 du piston 2 et le patin 23. Le bord de l'ouverture 103 traversée par le piston 2 est fixé au dessus 62 du capot 6.

La course du piston 2 est détectée par un capteur de translation 4 relié à une unité de traitement 5 du signal de capteur Si correspondant à la demande du conducteur pour commander la fonction.

De façon plus détaillée, selon la figure 2, le socle 11 est en forme de couronne circulaire 111 solidaire du cylindre 12 et dont les pattes 112 sont percées pour la fixation du dispositif 100 au plancher 101 de l'habitacle. La plaque 111 a une gorge 113 pour un joint pour le bord inférieur du capot 6 de façon à protéger le corps 1 contre la poussière et l'humidité.

Le bord 122 du cylindre 12 laisse dégagé le prolongement 22 du piston 2 avec sa collerette 21 pour recevoir par emboîtement, le manchon 231 du patin 23 dont le dessus 232 forme la surface d'appui du pied du conducteur.

Le cylindre 12 a un fond 122 muni d'un manchon 1221 recevant un support 31 pour le ressort 3. Le cylindre 12 est muni, en partie haute et en partie basse d'un palier 123 de guidage du piston 2. Le cylindre 12 est bordé de deux logements 13.

Le bord supérieur 121 du cylindre 12 reçoit la collerette 21 du piston 2 pour limiter son enfoncement en définissant ainsi la course (A) par rapport au bord supérieur 121 lorsque le piston 2 est en position de repos dans laquelle il est maintenu ou rappelé par le ressort de rappel 3. Ce ressort est porté par le support 31 monté dans le fond 122 du cylindre 12 qui, selon le mode de réalisation représenté est une plaque 311 avec un relief autour duquel le ressort 3 s'appuie sur la plaque 311. Celle-ci est portée par une tige 313 vissée dans le manchon taraudé 1221 de manière à pouvoir régler la position du support et, par suite, la précontrainte du ressort 3.

La translation du piston 2 est détectée par un capteur de translation 4 dans le logement 13 coopérant avec un index 41 porté par le piston 2. Ce premier ensemble capteur-index (4, 41) est doublé par un second ensemble capteur-index (4a, 41a) redondant pour garantir le fonctionnement si l'un des capteurs 4, 4a est en panne.

Les ensembles (4, 41) ou (4a, 41a) fonctionnent par l'émission d'un champ local d'interaction, inductif ou magnétique émis par l'index (41, 41a) et détecté par le capteur (4, 4a) respectif. Les capteurs (4, 4a) sont reliés à des circuits 51 associés ou à un circuit commun aux deux capteurs pour générer des signaux Si, Si' transmis à l'unité de traitement 5 par une liaison câblée reliée aux broches 52. Selon un mode de réalisation, les index (41, 41a) sont des aimants et leur environnement n'est pas ferromagnétique pour ne pas interférer avec leur champ magnétique respectif qui est d'une portée très locale ; pour cette raison, les index 41, 41a et leur capteur 4, 4a sont, de préférence dans des positions respectives les plus éloignées l'une de l'autre, c'est-à-dire des positions diamétralement opposées pour les deux ensembles capteur-index, de façon à dissocier les champs locaux d'interaction.

Selon la figure 2, le capot 6 a une paroi latérale 61 en forme de cloche ou de cylindre avec un bord inférieur 611 et un dessus 62 se terminant par un bord supérieur 621. Le bord inférieur 611 est en contact avec un joint bas 73 et le bord supérieur 621 est relié par un joint haut 74 au dessous 233 du patin 23. Le joint haut 74 peut être un soufflet, ce qui est également une réalisation possible du joint bas 73 entre le bord inférieur 611 et la couronne 111 du socle 11.

Le revêtement 102 est relié solidairement par le bord de son ouverture 103 au dessus 62 du capot 6 si bien que le revêtement 102 se déforme localement autour de l'ouverture pour absorber la course du piston 2 sans toutefois déformer le dôme relativement rigide formé par le revêtement 102 qui entoure le capot 6 et le couvre.

Le capot 6, libre en mouvement par rapport au piston 2, est guidé par sa paroi latérale 61, avec des guides 7 à ressort auxiliaire 73 de compression entre la collerette 612 du bord inférieur 611 et la couronne 111 du socle. Les guides 71 peuvent réaliser en même temps les points de fixation du socle 11 au plancher 101.

Au-delà de la couronne 111, les pattes 112 ont un perçage 112a pour recevoir un guide de coulissement 7 formé d'une vis 71 servant dans ce mode de réalisation à également la fixation du dispositif de commande 100 à la paroi 101. La vis 71 remonte à travers le perçage 112a reçoit un manchon 72 à collerette, serré entre le dessus de la patte 112 et un écrou 71a. Un ressort auxiliaire 73 est engagé sur le manchon 72 pour former ainsi un guide de coulissement à ressort de rappel pour le capot 6 dont le bord inférieur 611 a une collerette 612 avec des perçages 613 engagées sur chaque guide de coulissement 7 des pattes 112.

La vue en coupe du dispositif 100 selon la figure 2A, sans son capot 6 permet d'identifier plus facilement les détails du dispositif 100. Les logements 13 ont chacun un capteur 4, 4a relié à un circuit imprimé 51 et une broche 52. Le piston 2 a un corps 21 dont la partie inférieure a une cavité 24 pour recevoir le ressort de rappel 3 en forme de ressort hélicoïdal ; le ressort de rappel 3 s'appuie par une extrémité contre le fond 241 de la cavité 24 et par son autre extrémité, contre le support de ressort 31. La cavité 24 est munie d'évents 242.

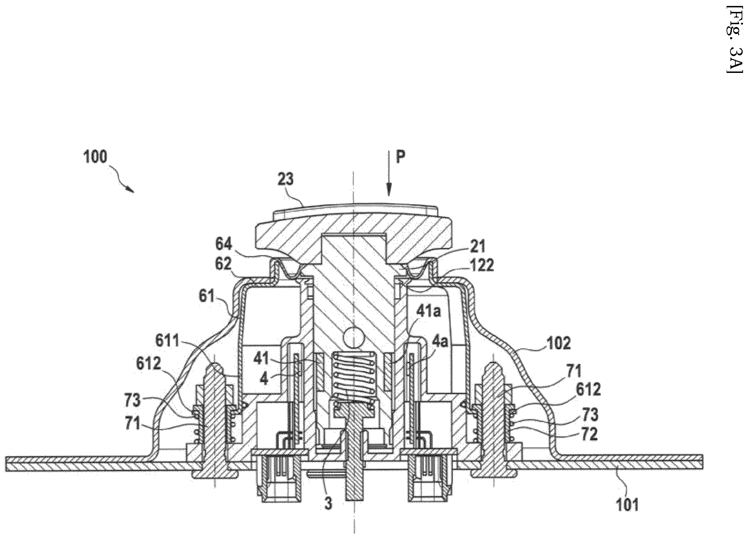

La figure 3A montre l'état d'enfoncement maximum du patin 23 et du piston 2 dont la collerette 21 est venue en appui contre le bord supérieur 121 du cylindre 12. Dans cette position limite, le capot 6 conserve sa position haute et la détection du mouvement du piston se fait normalement sans que le capot 6 n'intervienne dans cette détection ; sa collerette 612 est en position haute sur les guides de coulissement 7. Seul le joint haut 64 est déformé par l'enfoncement du piston 2.

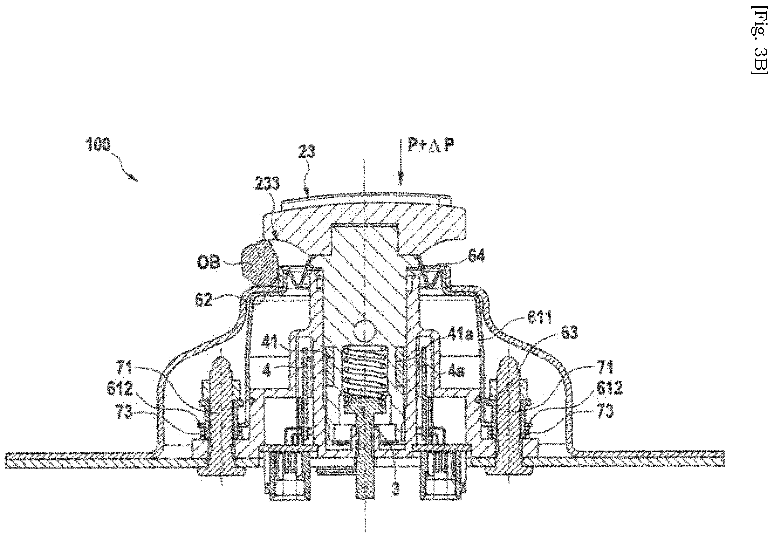

La figure 3B montre le dispositif de commande 100 dans le cas d'un corps étranger OB encastré dans l'intervalle entre le dessous 233 du patin 23 et le dessus 62 du capot 6. Dans la position représentée, le patin 23 soumis à la poussée P+ΔP, s'est enfoncé en entraînant le capot 6 qui ne se déforme pas. Pour une même course, le conducteur doit ainsi fournir une poussée P+ΔP supérieure pour vaincre la force de rappel développée par les ressorts auxiliaires 73 en plus de l'effort du ressort de rappel 3. Ils réalisent la sécurité du fonctionnement par leur redondance mais ne permettent pas de signaler l'engagement d'un corps étranger OB dans l'intervalle du dispositif de commande 100a. Le conducteur ne perçoit le corps étranger que par l'effort supplémentaire ΔP à fournir pour enfoncer le patin 23 et obtenir l'effet de freinage habituel.

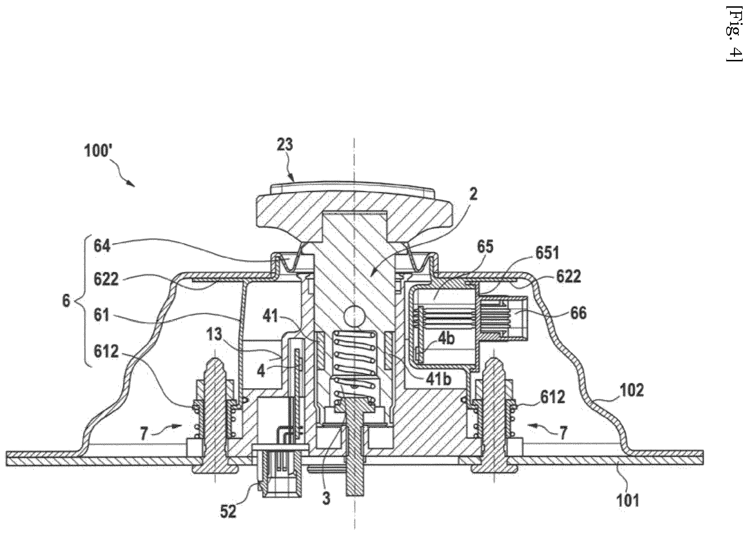

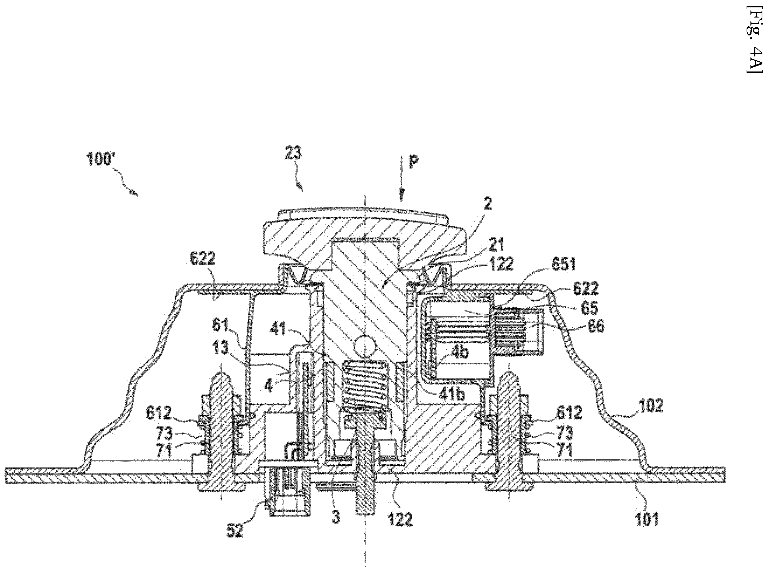

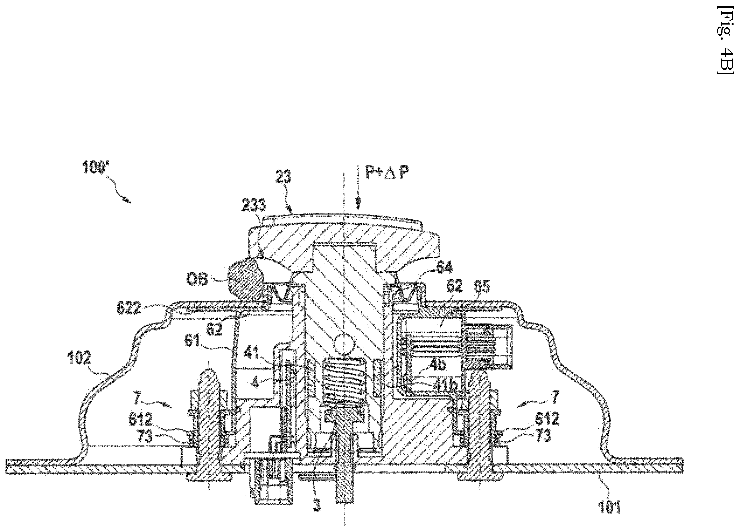

La figure 4 montre une variante de réalisation de dispositif de commande 100' qui a globalement la même structure que le dispositif de commande 100, mais avec le seul premier ensemble capteur-index 4, 41 alors que le second ensemble 4a, 41a, redondant, est remplacé par autre second ensemble 4b, 41b dont le deuxième capteur 4b porté par le capot 6 coopère avec un index 41b porté par le piston 2.

Le capot 6 a un boîtier 65 formé dans la paroi latérale 61 dans la partie symétrique à celle du logement 13 et en remplacement du deuxième logement 13 pour avoir le capteur 4b à proximité du cylindre 12 et à portée de l'index 41b du piston 2.

L'index 41b peut être le même que l'index 41a du premier mode de réalisation et se trouver à la même position. Le boîtier 65 qui n'est qu'une modification locale du capot 6 est fermé par un couvercle 651 portant un connecteur à broches 53 relié au circuit du capteur 4b installé dans le boîtier 65.

En fonctionnement normal (Fig. 4A), sans incident ou sans un corps étranger OB entre le patin 23 et le capot 6, le deuxième capteur 4b fournit un signal de détection Si' voisin de celui Si du capteur 4 puisque le capot 6 et donc le capteur 4a restent fixes. Les deux capteurs 4, 4b sont équivalents et en cas de panne de l'un ou de l'autre, la détection de la course du piston 2 se fait et permet de commander le freinage.

En cas de blocage (Fig. 4B) par un corps étranger OB sous le patin 23, celui-ci entraîne le capot 6 alors solidaire du piston 2 :
- le capteur 4 fournit un signal de translation Si,
- le capteur 4b fournit un signal de translation nul (S'i=0) puisque le capteur 4b et l'index 41b se déplacent en même temps sans translation relative entre les deux.

Ainsi :
* la course du patin 23 mesurée par le capteur 4 (signal Si) permet la commande de la fonction,
* la course nulle (S'i=0) du capteur 4b est interprétée par l'unité de traitement 5 comme traduisant la présence d'un corps étranger OB occasionnant le déplacement du capteur 4b et elle signale l'incident du corps étranger au conducteur,
* en cas de défaillance du capteur 4, le signal S'i=0 de la course différentielle nulle du capteur 4b est alors utilisé pour signaler l'incident et commander le fonctionnement de secours puisque le signal Si' ne représente que le blocage par le corps étranger OB, mais ne représente pas la course du patin 23 (poussée P+ΔP). Ne connaissant pas la cause, l'unité de traitement 5 ne peut que déclencher un signal de secours ou une commande de secours Ssec.

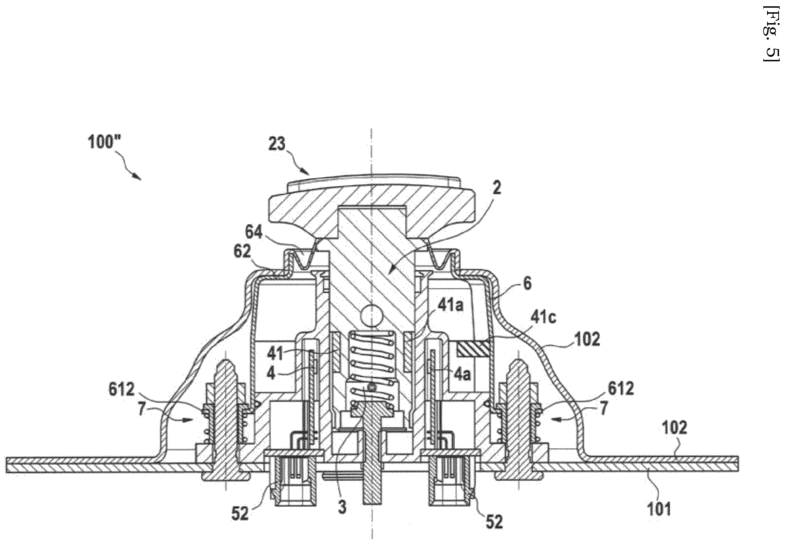

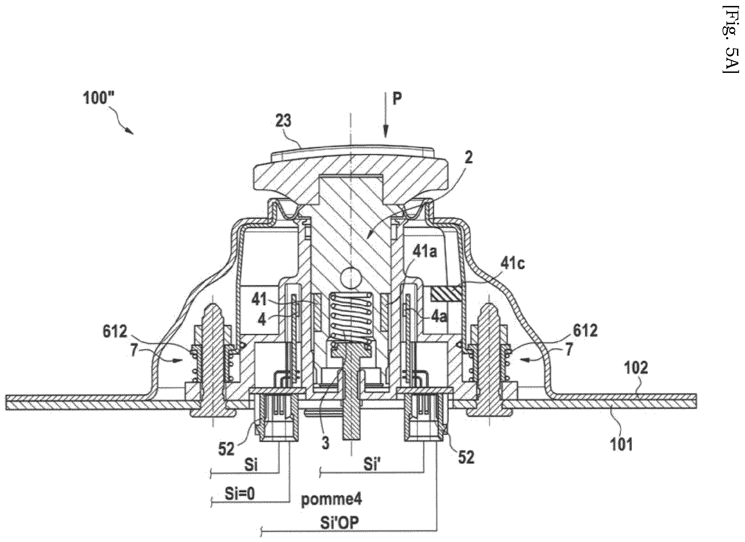

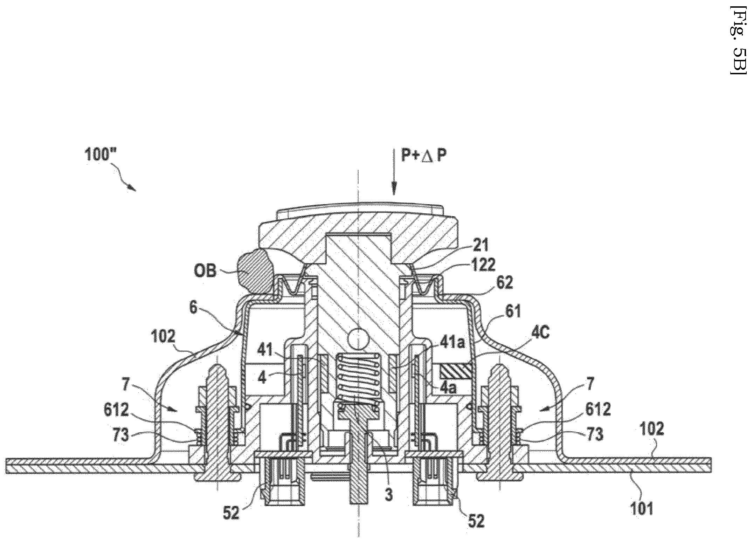

La figure 5 montre une autre variante de dispositif de commande 100" dans laquelle le premier ensemble capteur-index (4, 41) et le second ensemble (4a, 41a) sont conservés mais le deuxième ensemble est complété par un élément perturbateur de champ 41c associé au capot 6.

En fonctionnement normal (Fig. 5A), le piston 2 étant mobile et le capot 6 restant fixe : l'élément perturbateur 6c ne perturbe pratiquement pas l'interaction entre le deuxième capteur 4a et son index 41a puisque le capteur 4a sort rapidement de la zone d'action de l'élément perturbateur 41c.

Lorsqu'un corps étranger OB (Fig. 5B) est bloqué entre le patin 23 et le dessus 62 du capot 6, l'élément perturbateur 41c se déplace en synchronisme avec le piston 2 et l'index 41a, de sorte que le champ d'interaction de l'index 41a est perturbé de façon constante et le capteur 4a émet un signal Si'p perturbé constant car cet effet est constant.

Ce signal S'ip est utilisé pour signaler le corps étranger OB au conducteur par un voyant ou autre signal sonore ou haptique.
- En cas de panne du premier ensemble (4, 41) et sans corps étranger, l'unité de traitement 5 reçoit :
   - aucun signal Si (Si=0) ce qui traduit la panne du premier ensemble (4, 41'), et
   - le signal S'i OP= signal perturbé de la position de repos de l'ensemble (4a, 41a, 41c),
- En cas de panne du deuxième ensemble (4a, 41a, 41c) sans ou avec un corps étranger, l'unité de traitement 5 reçoit :
   - le signal Si mesurant la course produite par la poussée P ou P+ΔP,
   - le signal S'i=0
      le dispositif de commande émet :
   - une commande Sc en réponse au signal Si,
   - un signal de défaut SA signalant la panne du deuxième ensemble.

### NOMENCLATURE DES ELEMENTS PRINCIPAUX

100, 100', 100" Dispositif de commande électrique
101 Paroi / plancher
102 Revêtement de sol
103 Ouverture du revêtement
1 Corps
11 Socle
111 Couronne
112 Patte
112a Perçage
113 Gorge
12 Cylindre
121 Bord supérieur 122 Fond
1221 Manchon
123 Palier
13 Logement
2 Piston
21 Collerette
22 Prolongement du piston
23 Patin
231 Manchon
232 Dessus
233 Dessous
24 Cavité
241 Fond
242 Event
243 Gorge
3 Ressort de rappel
31 Support de ressort
311 Plaque
312 Relief
313 Tige
4 Premier capteur de translation
4a Second capteur de translation
4b Autre second capteur de translation
41 Premier index
41a Second index
41b Autre second index
41c Elément perturbateur du champ local d'interaction
5 Unité de traitement
51 Circuit imprimé
52 Connecteur
53 Connecteur
6 Capot
61 Paroi latérale
611 Bord inférieur
612 Collerette
613 Perçage
62 Dessus du capot
621 Bord supérieur
622 Bord supérieur agrandi
63 Joint bas
64 Joint haut
65 boîtier
651 Couvercle
7 Guide de coulissement
71 Vis
71a Ecrou
72 Manchon
73 Ressort auxiliaire
ZZ Axe du piston
P Poussée sur le ressort combiné
ΔP Augmentation de la poussée
Pmax Poussée maximum
Si Signal du premier capteur 4
Si=0 Panne du premier capteur 4
S'i Déplacement relatif mesuré par le deuxième capteur 4a, 4b
Si=0 Déplacement relatif nul
Si'0p Signal initial perturbé du deuxième capteur 4a
Si'0 Signal initial non perturbé
Si'p Signal perturbé
Sc Signal de commande
SA Signal d'alarme
A Course du patin
B Course du capot
C Intervalle maximum entre le dessous du capot et le dessus du patin

## Revendications

1. Dispositif de commande électrique (100, 100', 100") antiblocage actionné par le conducteur, comme système à guidage linéaire de commande de la fonction d'accélération ou de freinage de véhicule, comprenant :
A. un corps avec un socle (11) portant un cylindre (12) recevant un piston (2) muni d'un patin d'actionnement (23) pour recevoir la poussée par le pied du conducteur,
B. un système de ressort (3) avec un ressort (31) de rappel du piston (2) vers sa position de repos,
C. un capteur (4) de la translation du piston (2) soumis à la poussée (P) du conducteur sur le patin (23) et
D. une unité d'exploitation (5) recevant le signal (Si) du capteur de translation (4) pour générer un signal de commande (SC) de la fonction en réponse à la poussée (P),
**caractérisé en ce qu'**il comprend un capot (6) coulissant :
* entourant le cylindre (12) à partir du socle (11) jusqu'au patin (23),
* indépendant du mouvement du piston (1) dans la course d'enfoncement (A) du patin (23) entre sa position haute de repos et sa position basse d'enfoncement maximum,
* laissant un intervalle entre son dessus (62) et le dessous (233) du patin (23), et
* relié en coulissement au socle (11) par son bord inférieur (611) par un guide (7) à ressort auxiliaire (72) maintenant ou rappelant le capot (6) dans sa position haute de repos.

2. Dispositif de commande (100, 100', 100") selon la revendication 1, **caractérisé en ce que**
- l'intervalle d'enfoncement (A) est défini par le bord supérieur (121) du cylindre (12) et une collerette (22) du piston (2) au-dessus de laquelle le patin (23) est fixé au prolongement (22) du piston,
- le patin (23) installé sur le piston laissant par rapport au dessus (62) du capot un intervalle (C) supérieur à l'intervalle d'enfoncement (A) pour ne pas s'appuyer directement sur le dessus (62) du capot (6) dans sa course d'enfoncement (A) entre sa position haute de repos et sa position d'enfoncement maximum.

3. Dispositif de commande (100, 100', 100") selon 1,
**caractérisé en ce que**
le capot (6) a une forme de dôme avec :
- un dessus (62) dont le bord (621) borde une ouverture pour le passage de l'extrémité (212) du piston (2) recevant le patin (23), et
- une paroi latérale (61) dont le bord inférieur (611) coopère avec les guides de coulissement (7) du capot (6), intégrant les ressorts auxiliaires (72) de rappel du capot (6) en position de repos,
- la course de coulissement (B) possible pour le mouvement d'enfoncement du capot (6) étant supérieure à l'intervalle (A) entre le dessus (61) du capot (6), le cas échéant couvert par le revêtement de sol (102) et le dessous (233) du patin (23) et qui est accessible aux corps étrangers (OB).

4. Dispositif de commande (100, 100', 100") selon l'une des revendications 1 et 3,
**caractérisé en ce que**
le bord supérieur (622) du capot (6) est relié au dessous (233) du patin (23) par un joint (64) souple en forme de soufflet.

5. Dispositif de commande électrique (100') selon la revendication 1, **caractérisé en ce qu'**il comprend
• un premier ensemble capteur-index (4, 41) pour détecter la course d'enfoncement du patin (23),
- le capteur (4) porté par le cylindre (2) et l'index (41) porté par le corps du piston (2), coopérant entre eux par un champ local d'interaction,
- le capteur (4) étant sur le trajet de l'index (41) entre la position de repos et la position d'enfoncement maximum du piston (2) pour une poussée maximum (Pmax) sur le patin (23) par le conducteur, et
• un second ensemble capteur-index (4b, 41a), installé hors du champ local d'interaction du premier ensemble,
- l'index (41a) étant porté par le piston (2),
- le second capteur (4b) étant porté par le capot (6) dans le champ d'interaction de son index (41a),
• le premier ensemble (4, 41) fournissant un signal de translation (Si) du piston (2) selon la poussée (P) sur le patin (23),
- le deuxième ensemble (4b, 41a) fournissant un signal (Si') du déplacement relatif du piston (2) par rapport au déplacement du capteur (4b) porté par le capot (6) et,
- les signaux (Si, Si') étant fournis à l'unité d'exploitation (5) pour générer :
* un signal de commande (Sc) de la fonction et,
* un signal d'avertissement (SA) pour le conducteur si
** le signal (Si) du premier capteur de translation (4) est inexistant et si
** le signal (Si') du deuxième capteur (4b) porté par le capot (6) indique un déplacement relatif nul (Si'=0) du deuxième capteur (4b) porté par le capot (6), par rapport à son index (41a) porté par le piston (2), ou
* un signal de de secours (Ssec) s'il reçoit les signaux nuls (Si=0) et (Si'=0).

6. Dispositif de commande électrique (100") selon la revendication 1, **caractérisé en ce qu'**il comprend
• un premier ensemble capteur-index (4, 41) pour détecter la course d'enfoncement du patin (23),
- le capteur (4) porté par le cylindre (2) et l'index (41) porté par le corps du piston (2) coopérant par un champ local d'interaction,
- le capteur (4) étant sur le trajet de l'index (41) entre sa position de repos et la position d'enfoncement maximum du piston (2) pour une poussée maximum (Pmax) sur le patin (23) par le conducteur,
• un second ensemble capteur-index (4a, 41a), installé hors du champ d'interaction du premier ensemble,
- l'index (41a) étant porté par le piston (2),
- le capteur (4a) étant porté par le cylindre (2) dans le champ d'interaction de l'index (41a),
• un élément perturbateur (41c) du champ local d'interaction du second ensemble (4a, 41a) porté par le capot (6) et installé pour :
- au repos, à l'état initial, être ou non dans le champ local d'interaction du deuxième ensemble (1a, 4a),
- dans des conditions de poussée (P), être hors du champ d'interaction du second ensemble (4a, 41a),
- venir dans le champ local d'interaction du second ensemble (1a, 41a) lorsque le patin (23) entraîne le capot (6) par l'interposition d'un corps étranger (OB) et perturber le signal de l'index (41a) du second ensemble.

7. Dispositif de commande électrique (100") selon la revendication 1, caractérisé en ce
• le premier capteur (4) génère :
un signal de translation (Si) pour la poussée (P) quel que soit l'état du deuxième capteur (4a) et la présence ou non d'un corps étranger (OB) dans l'intervalle (A), et
- un signal nul (Si=0) si le premier ensemble (4, 41) est en panne,
• le second capteur (4a) génère :
- au repos :
* un signal initial perturbé (Si'0p) en position de repos si l'élément perturbateur (41c) est initialement dans le champ local d'interaction du deuxième ensemble (capteur-index) (4a, 41a),
* un signal initial non perturbé (Si'0) si l'élément perturbateur (41c) n'est pas initialement dans le champ local d'interaction du deuxième ensemble (4a, 41a),
- pendant l'application de la poussée (P), sans insertion d'un corps étranger (OB),
* un signal non perturbé (Si') puisque l'élément perturbateur (41c) est mis hors du champ local d'interaction de l'index (41a) déplacé avec le piston (2),
- pendant l'application de la poussée (P+ΔP), avec insertion d'un corps étranger (OB), :
* générer un signal perturbé (Si'p) de l'index (41a) pendant tout le mouvement du piston (2) sous la poussée (P+ΔP),
* générer un signal nul (Si'=0) (absence de signal) en cas de défaillance du second ensemble (4a, 41a), et
• l'unité de traitement (5) génère :
** un signal de commande (Sc) à partir du signal (Si) du premier capteur (4),
** un signal d'avertissement (SA) si le signal perturbé (Si'p) du deuxième capteur (4a) accompagne le signal (Si) et,
** un signal de secours (SSEC) si le signal (Si) est nul et le signal (Si') est nul et si le signal (S'ip) apparaît.

8. Dispositif de commande (100, 100', 100") selon la revendication 1, **caractérisé en ce que**
le cylindre (21) du piston (2) a une cavité axiale (24) débouchant dans le dessous du piston et recevant le ressort hélicoïdal de rappel (31), appuyé contre le fond (241) de la cavité (24) et contre un support de ressort (31) relié au fond (122) du cylindre (12).

9. Dispositif de commande (100, 100', 100") selon la revendication 2, **caractérisé en ce que**
le support de ressort (31) est une plaquette (311) surmontée d'un relief engagé dans l'extrémité du ressort de rappel (3) pour le guider et le tenir,
le support (31) étant solidaire d'une tige de réglage (313) traversant, de façon réglable, le fond (122) du cylindre (12).
